# EUROPÄISCHE PATENTANMELDUNG

(11) **EP 0 947 368 A2**
(43) Veröffentlichungstag der Anmeldung: **06.10.1999**
(21) Anmeldenummer: 99106584.8
(22) Anmeldetag: 31.03.1999
(51) Int. Cl.: B60K 15/04

(54) **Kraftfahrzeugtank aus Kunststoff**

(30) Priorität: 03.04.1998 DE 19814958
(71) Anmelder: Kautex Textron GmbH & Co. KG., 53229 Bonn (DE)
(72) Erfinder: Eulitz, Dirk, 53225 Bonn (DE); Kolf, Walter, 53639 Königswinter (DE); Walter, Rüdiger, 53123 Bonn (DE); Runkel, Jürgen, 53229 Bonn (DE); Wagner, Axel, 53225 Bonn (DE); Schmitz, Dieter, 53227 Bonn (DE)
(74) Vertreter: Koepsell, Helmut, Dipl.-Ing.

(57) **Zusammenfassung**

Die Erfindung betrifft einen Kraftfahrzeugtank aus Kunststoff mit wenigstens einer Öffnung, an der ein Anschlußstück angebracht ist, welches einen Rohrabschnitt aus einem für Kraftstoff wenig permeablen Kunststoff aufweist, der mit einer Ummantelung aus einem anderen Kunststoffmaterial versehen ist, das mit der Wandung des Tankes verbindbar ist. Der Rohrabschnitt des Anschlußstückes weist an seinem tankseitigen Ende einen über die Ummantelung vorstehenden Teilabschnitt auf, der sich in die Tanköffnung erstreckt, wobei der die Öffnung begrenzende Bereich der Tankwandung gegenüber der äußeren Mantelfläche des vorstehenden Teilabschnittes des Rohrabschnittes abgedichtet ist.

## Beschreibung

Die Erfindung betrifft einen Kraftfahrzeugtank aus Kunststoff gemäß dem Oberbegriff des Anspruches 1.

Insbesondere aus Gründen des Umweltschutzes ist es erforderlich, daß die Verdunstungsverluste des im Tanksystem befindlichen Kraftstoffes eines Kraftfahrzeuges so gering wie möglich sind. Bei Herstellung des Tanks aus einem für die üblichen Kraftstoffe permeablen Material, beispielsweise Polyethylen, ist es daher seit langem üblich, diese Tanks einer besonderen Behandlung, beispielsweise durch Fluorieren, zu unterziehen, um die Permeabilität der Tankwandung merklich zu reduzieren. Eine andere Möglichkeit besteht darin, die Wandung des Tankes mehrschichtig auszubilden und eine Barriereschicht beispielsweise aus Polyamid vorzusehen, die für Kraftstoff undurchlässig ist.

Mittlerweile sind jedoch die Vorschriften bezüglich der zulässigen Verdunstungsverluste so streng, daß selbst die an Tankanschlüssen, beispielsweisen für Ventile, Leitungen usw. auftretenden Verdunstungsverluste für das Einhalten der zulässigen Grenzen bedeutsam sind.

Es ist bereits bekannt, ein Ventil innen an der Wandung eines Kraftfahrzeugtankes unter Verwendung eines Anschlußnippels anzubringen, der aus Polyamid besteht und außenseitig von einem Mantel aus Polyethylen umgeben ist. Letzterer kann mittels Spritzgießen aufgebracht werden. Polyamid und andere für Kraftstoffe wenig durchlässige Kunststoffe sind mit Polyolefinen, z. B. Polyethylen, nicht verschweißbar. Die Befestigung des Ventils mit dem Nippel an dem aus Polyethylen bestehenden Tank geschieht daher mittels Herstellen einer Schweißverbindung zwischen der Ummantelung des Nippels und der äußeren Oberfläche der Tankwandung. Durch die Öffnung der letzteren ragt ein Ventilgehäuse in das Innere des Tanks, ohne jedoch einen flüssigkeitsdichten Verschluß der Öffnung außerhalb des Ventilgehäuses zu bewirken. Dies hat zur Folge, daß flüssiger Kraftstoff und Kraftstoffdämpfe in den Raum gelangen, der von der Ummantelung und dem die Öffnung umgebenden Bereich der Tankwandung begrenzt wird. Da die aus Polyethylen bestehende Ummantelung für Kraftstoff permeabel ist, sind merkliche Verdunstungsverluste durch diesen Bereich der Ummantelung des Nippels hindurch unvermeidbar. Bei dieser bekannten Anordnung ist weiterhin der Kern des Nippels aus Polyamid mit umlaufenden Rippen versehen, die in entsprechende Ausnehmungen der Ummantelung eingreifen, um so eine formschlüssige Verbindung sowie eine Dichtung zwischen Kern und Ummantelung herzustellen.

Der Erfindung liegt die Aufgabe zugrunde, einen Kraftfahrzeugtank aus Kunststoff der einleitend beschriebenen Art so auszugestalten, daß die auf das Vorhandensein des Rohr-Anschlußstückes zurückzuführenden Verdunstungsverluste so stark reduziert werden, daß sie den Vorschriften genügen, wobei unter allen in der Praxis üblichen Betriebsbedingungen eine feste Verbindung zwischen dem den Kern darstellenden Rohrabschnitt und der Ummantelung gewährleistet ist.

Diese Aufgabe wird durch Anwendung der im Kennzeichen des Anspruches 1 angeführten Merkmale gelöst.

Weitere Merkmale der Erfindung ergeben sich aus den Unteransprüchen.

Die erfindungsgemäße Ausgestaltung hinsichtlich der Abdichtung der Öffnung in der Tankwandung führt dazu, daß Kraftstoff als Flüssigkeit und/oder Gas im Bereich dieser Öffnung nur durch den inneren freien Querschnitt des Anschlußstückes bzw. des Rohrabschnitts austreten kann, wohingegen ein Austreten von Kraftstoff durch die Öffnung außerhalb der durch das Anschlußstück definierten Leitung nicht möglich ist. Da der den Kern des Anschlußstückes, also den Rohrabschnitt, bildende Kunststoff, beispielsweise Polyamid, nur eine vernachlässigbare Permeabilität für Kraftstoff aufweist und die Wandung des Tankes für Kraftstoff auch nur wenig permeabel ist, sei es durch entsprechende Behandlung des Tankes z. B mittels Fluorieren, sei es durch das Vorhandensein einer Barriereschicht in der Wandung, bleibt die Menge an gasförmigem Kraftstoff, der in den von der Ummantelung außenseitig begrenzten Raum eintritt, so gering, daß die dadurch nach außen auftretenden Verdunstungsverluste vernachlässigbar sind. Diese Verbesserung wird mit einfachen Mitteln erreicht, da die Herstellung des Anschlußstückes und die Vorbereitung oder Bearbeitung des Tanks zum Herstellen der Öffnung und gegebenenfalls das Anordnen einer Dichtung keinen ins Gewicht fallenden zusätzlichen Aufwand erfordern. Dies ist deshalb wichtig, weil es sich bei derartigen Kraftfahrzeugtanks um Artikel handelt, die in sehr großer Stückzahl hergestellt werden.

In der Zeichnung sind einige Ausführungsbeispiele der Erfindung dargestellt. Es zeigen:
- Fig. 1: einen Ausschnitt aus einem Kraftfahrzeugtank mit daran angebrachtem Rohr-Anschlußstück in Draufsicht,
- Fig. 2: einen Schnitt nach der Linie II-II der Fig. 1.
- Fig. 3: eine der Fig. 2 entsprechende Darstellung einer zwei ten Ausführungsform,
- Fig. 4: eine der Fig. 2 entsprechende Darstellung einer weiteren Ausführungsform.

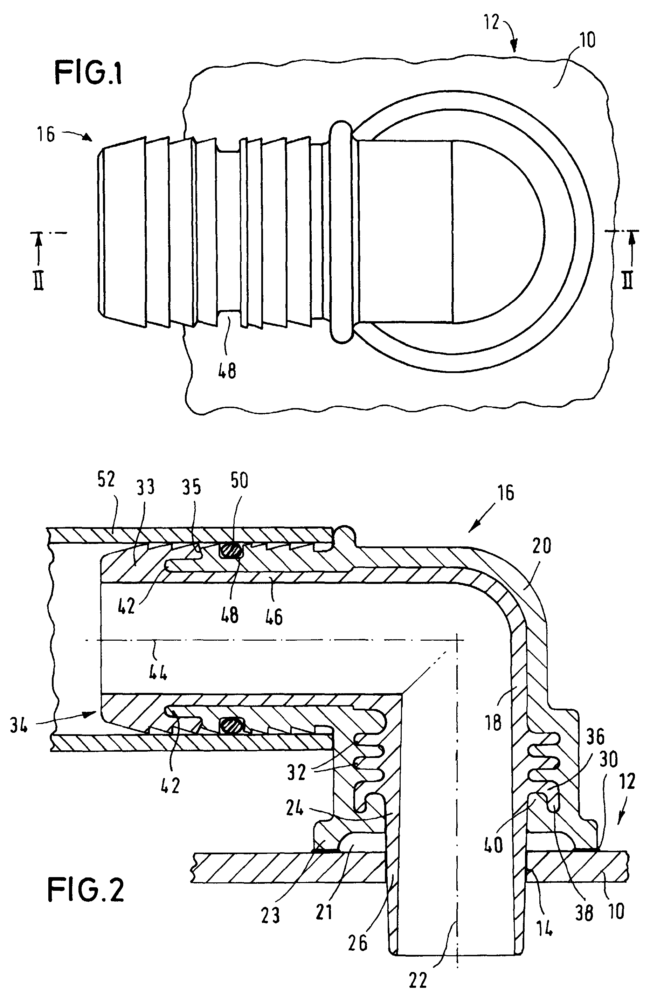

Gemäß den Fig. 1 und 2 ist die Wandung 10 des Kraftfahrzeugtankes 12 mit einer im allgemeinen nach Herstellung des Tankes angebrachten Öffnung 14 versehen, an die ein Anschlußstück 16 angeschlossen ist. Dieses weist einen die eigentliche Leitung bildenden Rohrabschnitt 18 aus einem Kunststoff auf, der für Kraftstoff nicht nur nahezu undurchlässig, sondern auch relativ formsteif ist. Dabei kann es sich beispielsweise um Polyamid handeln. Dieser Rohrabschnitt 18 ist mit einer Ummantelung 20 versehen, die an beiden Enden des etwa rechtwinkligen Anschlußstückes kürzer ist als der Rohrabschnitt 18.

Bei allen in der Zeichnung dargestellten Ausführungsbeispielen ist das Anschlußstück rechtwinklig ausgeführt, wenngleich dies für die Erfindung ohne große Bedeutung ist. Das Anschlußstück kann auch linear oder unter einem anderen Winkel abgebogen oder sonstwie ausgeführt sein.

Der senkrecht zur Tankwandung 10 und damit im wesentlichen parallel zur Längsachse 22 der Öffnung 14 verlaufende Teil 24 des Rohrabschnittes 18 weist einen Teilabschnitt 26 auf, der gegenüber der Ummantelung 20 vorsteht und durch die Öffnung 14 in das Innere des Tankes 12 hineinragt. Der dem Tank 12 zugekehrte ringförmige Endbereich der Ummantelung 20 bildet einen Fuß 23 und dient der Befestigung des Anschlußstückes 16 an der Tankwandung 12. Dies geschieht im allgemeinen mittels eines Schweißvorganges, da die Ummantelung 20 aus einem Material besteht, welches jedenfalls mit dem die äußere Oberfläche des Tankes bildenden Material veschweißbar ist. Normalerweise wird es sich dabei um das bereits erwähnte Polyethylen handeln. Der Endbereich 23 befindet sich dabei in einem radialen Abstand vom Rohrabschnitt 18, so daß zwischen letzterem und dem Endbereich 23 der Ummantelung ein Ringraum 21 vorhanden ist.

Beim Ausführungsbeispiel gemäß den Fig. 1 und 2 ist die Anordnung so getroffen, daß der Außendurchmesser des Rohrabschnittes 18 im Bereich der Öffnung 14 in der Weise an den Durchmesser der letzteren angepasst ist, daß die Mantelfläche des Teilabschnittes 26 an dem die öffnung 14 begrenzenden Wandbereich der Tankwandung 10 anliegt und somit einen flüssigkeitsdichten Verschluß bewirkt.

Die vorbeschriebene Ausgestaltung verhindert das Hindurch-treten von Flüssigkeit in den Ringraum 21 hinein, der außenseitig lediglich durch den Endbereich 23 der Ummantelung 20 begrenzt ist, welcher sich in einem Abstand von dem über die Ummantelung 20 vorstehenden Teilabschnitt 26 des Kernes 18 befindet. Dies ist deshalb wichtig, weil die Ummantelung 20, wie bereits erwähnt, im allgemeinen aus einem Kunststoff, beispielsweise Polyethylen besteht, der einerseits mit der Tankwandung 12 verschweißbar, andererseits jedoch für Kraftstoff permeabel ist. Die Möglichkeit, daß Kraftstoff durch die Tankwandung 10 in merklichen Mengen diffundiert, braucht nicht in Betracht gezogen zu werden, da die Tankwandung innenseitig entweder in entsprechender Weise, z. B. mittels Fluorieren, behandelt worden oder aber mehrschichtig ausgebildet ist, wobei wenigstens eine dieser Schichten für Kraftstoff im wesentlichen undurchlässig ist. Der Rohrabschnitt 18 besteht ohnehin aus einem Material, beispielsweise Polyamid, welches für Kraftstoff keine oder nur eine vernachlässigbare Durchlässigkeit aufweist und somit eine Barriere gegen das Eindringen von gasförmigem Kraftstoff in den Ringraum 21 bildet.

Der senkrecht zur Tankwandung 10 verlaufende Teil 24 des Anschlußstückes ist im Bereich der Ummantelung 20 mit umlaufenden, leistenförmigen Vorsprüngen 32 versehen, zwischen die das Material 20 der Ummantelung greift, die im allgemeinen mittels Spritzgießen um den Rohrabschnitt 18 angebracht wird. Auf diese Weise wird eine formschlüssige Verbindung zwischen Rohrabschnitt 18 und Ummantelung 20 hergestellt, die zudem nach Art einer Labyrinthdichtung wirkt und Kraftstoff in flüssiger oder gasförmiger Phase, der ggf. doch zwischen Rohrabschnitt und Ummantelung gelangt, daran hindert, den mit den umlaufenden Rippen 32 versehenen Bereich in Richtung auf das freie Ende 34 des Anschlußstückes 16 zu passieren.

Die dem Tank 12 zugekehrte radiale Rippe 36 ist dabei zusätzlich mit einem Fortsatz 38 versehen, der etwa um 90° in Richtung auf den Tank 12 abgebogen ist und somit eine im wesentlichen koaxial zur Längsachse 22 der Öffnung 14 und des Teiles 24 des Anschlußstückes 16 verlaufende Hülse bildet und eine Art Hinterschneidung 40 begrenzt, in die beim Anbringen der Ummantelung 20 ebenfalls Kunststoffmaterial eintritt, so daß die Dichtwirkung zwischen Rohrabschnitt 18 und Ummantelung 20 noch verbessert wird. Dies gilt insbesondere auch dann, wenn im Fall des Quellens des die Ummantelung bildenden Materials unter der Einwirkung von Kraftstoff eine Vergrößerung des Volumens der Ummantelung radial zur Längsachse 22 im Bereich der Hinterschneidung eintritt, die die Dichtwirkung zwischen Rohrabschnitt 18 und Ummantelung 20 noch vergrößern würde.

Der Rohrabschnitt 18, der sich am anderen Ende 34 des Anschlußstückes mit einem Endabschnitt 33 ebenfalls über die Ummantelung 20 hinaus erstreckt, ist in einem Abstand von diesem freien Ende 34 an einem Absatz 35 ebenfalls mit einer Art Hinterschneidung 42 versehen, die im wesentlichen parallel zur Längsachse 44 des abgewinkelten Teils 46 des Rohrabschnittes 18 verläuft und das Ende der Ummantelung aufnimmt. Hier wird ebenfalls neben einem Formschluß zwischen Rohrabschnitt 18 und Ummantelung 20 eine Verbesserung der Abdichtung bewirkt, wobei im Falle des Quellens des die Ummantelung bildenden Kunststoffes auch hier die dabei bewirkte Pressung des die Ummantelung bildenden Materials gegen den eine merkliche größere Formsteifigkeit aufweisenden Rohrabschnitt 18 die Dichtwirkung verbessert. Im übrigen wird auch am freien Ende 34 des Anschlußstückes durch die vorbeschriebene Ausgestaltung erreicht, daß der das Anschlußstück durchströmende Kraftstoff mit der Ummantelung nicht in Berührung kommt.

Das Anschlußstück 16 ist an Seinem abgewinkelten Teil 46 im Bereich der Ummantelung mit einer umlaufenden Nut 48 für einen O-Ring 50 versehen. Dieser bewirkt eine zusätzliche Dichtung zwischen der äußeren Oberfläche des Anschlußstückes 16 bzw. der Ummantelung 20 desselben und dem Endabschnitt 52 einer Leitung, die mit dem freien Ende des Anschlußstückes 16 verbunden ist. Diese Leitung ist über eine nicht dargestellte Schelle oder sonstwie in geeigneter Weise am Anschlußstück 16 angebracht. Der Dichtring 50 soll verhindern, daß Kraftstoffdämpfe, die ggf. entlang der Trennfläche zwischen Kern Rohrabschnitt 18 und Ummantelung 20 nach außen gelangen, in die Atmosphäre austreten. Vielmehr sollen derartige Dämpfe aufgrund der vom den Dichtring 50 gebildeten Sperre in die Leitung 52 abfließen, die mit dem Anschlußstück verbunden ist.

Beim Ausführungsbeispiel gemäß den Fig. 1 und 2 ist der Endabschnitt 33 des Rohrabschnittes 18 außenseitig mit sägezahnförmigen Dicht- und/oder Halteringen für den Anschluß der Leitung 52 versehen. Dadurch, daß der Endabschnitt 33 direkt mit der für Kraftstoff nicht permeablen Leitung 52 in Verbindung steht, ist auch in diesem Bereich dafür gesorgt, daß nur sehr kleine Mengen an Kraftstoff durch Diffusion nach außen dringen. Des weiteren bildet das formsteifere Material des Rohrabschnittes 18 einen stützenden Kern für eine ggf. vorhandene, die Leitung 52 umgebende Schelle oder dgl., durch welche die Leitung 52 auf dem Anschlußstück 16 gehalten wird.

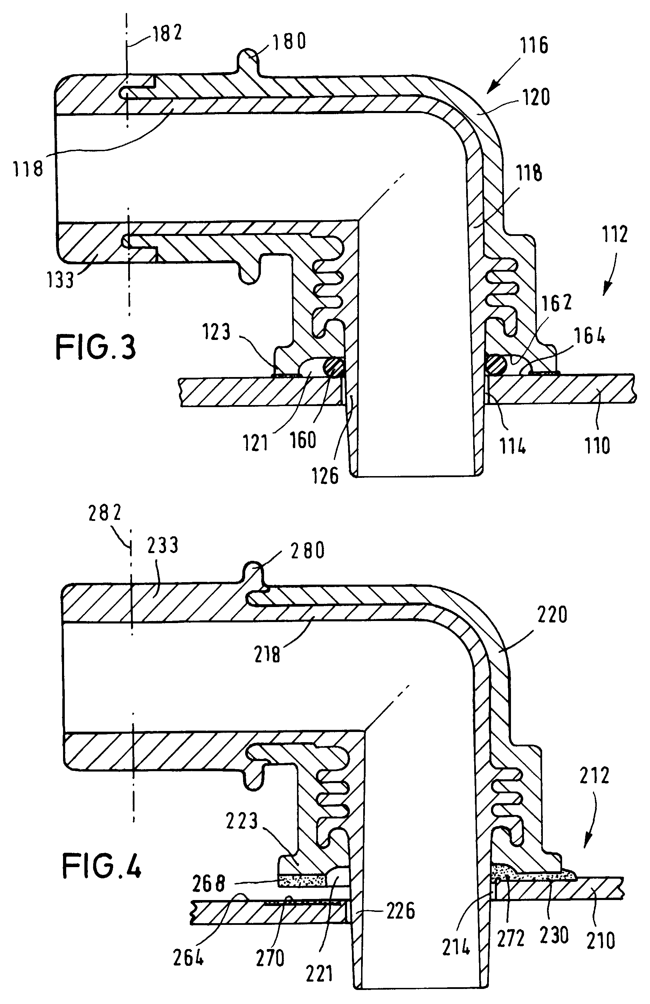

Das Ausführungsbeispiel gemäß Fig. 3 stimmt in allen wesentlichen Einzelheiten mit dem der Fig. 1 und 2 überein, so daß gleiche Teile auch mit gleichen, jedoch in Fig. 3 um jeweils 100 höheren Bezugszeichen versehen sind. Ein Unterschied besteht darin, daß die Abdichtung der Öffnung 114 in der Wandung 110 des Tankes 112 gegenüber dem Teilabschnitt 126 des Rohrabschnittes 118 durch einen im Ringraum 121 angeordneten Dichtring 160 erfolgt, welcher am Teilabschnitt 126 anliegt und durch die Ummantelung 120, d. h., durch deren gegenüber dem Fuß 123 etwas zurückgesetzte Stirnfläche 162, auf Druck beansprucht wird, so daß eine Anlage des Dichtrings sowohl an der äußeren Mantelfläche des Teilabschnittes 126 des Rohrabschnittes 118, an der äußeren Oberfläche 164 der Tankwandung 110 und an der Stirnfläche 162 der Ummantelung gewährleistet ist und somit die Öffnung 114, die bei der Ausführungsform gemäß Fig. 3 nicht durch den Teilabschnitt 126 außerhalb desselben völlig verschlossen wird, abdichtet. Es ist natürlich auch möglich, beide Ausführungen miteinander zu kombinieren und somit zusätzlich auch dann einen vorteilhafterweise als O-Ring ausgebildeten Dichtring vorzusehen, wenn die Öffnung 14 bzw. 114 in der Tankwandung bereits durch den Teilabschnitt 26 bzw. 126 des Rohrabschnittes 18 bzw. 118 flüssigkeitsdicht verschlossen ist.

Ein weiterer Unterschied gegenüber der Ausführungsform gemäß den Fig. 1 und 2 besteht darin, daß der Endabschnitt 133 des Anschlußstückes 116 eine Ausgestaltung aufweist, die für das Zusammenwirken mit einem sogenannten Quick-Connector erforderlich ist. Dabei ist außenseitig am Endabschnitt 133 ein Verriegelungsring 180 angeformz, der mit einem Verriegelungsteil am Quick-Connector zusammenwirkt und von diesem hintergriffen wird. Im Falle der Ausführungsform gemäß Fig. 3 ist dieser Verriegelungsring 180 an der Ummantelung 120 angebracht. Die Abdichtung innerhalb des Quick-Connectors erfolgt jedoch in dem durch die strichpunktierte Linie 182 markierten Bereich, d. h., gegenüber dem Rohrabschnitt 118, der aus einem Material besteht, das für Kraftstoff nicht oder nur wenig durchlässig ist.

Eine weitere Ausführungsform ist in Fig. 4 dargestellt, die ebenfalls weitgehend mit der Ausführungsform gemäß den Fig. 1 und 2 übereinstimmt, so daß gleiche Teile auch mit gleichen, jedoch gegenüber den Fig. 1 und 2 um 200 höheren Bezugszeichen versehen sind. In Fig. 4 ist die Wandung 210 des Tankes 212 in zwei unterschiedlichen Höhenlagen dargestellt, wobei rechts die fertige Schweißverbindung 230 und links die Lage der dabei zusammenwirkenden Teile, also Wandung 210 und Fuß 223, in den Positionen unmittelbar vor Herstellung der Verbindung dargestellt sind. Die dunkel angelegten Bereiche 268 bzw. 270 werden zum Zwecke der Herstellung der Schweißverbindung im allgemeinen im Zuge des sogenannten Spiegelschweißens erwärmt und plastifiziert, worauf dann die beiden Teile gegeneinander gedrückt werden, um die Schweißverbindung 230 herzustellen. Bei der Ausführung gemäß Fig. 4 sieht dabei die Erfindung vor, daß ein Teil des plastifizierten Materials in den Bereichen 268, 270 von Ummantelung 220 und Tankwandung 210 verdrängt wird derart, daß der Ringraum 221 am Ende der Herstellung der Schweißverbindung 230 durch das verdrängte Material 272 ganz oder weitgehend ausgefüllt ist, jedenfalls so weit, daß dieses verdrängte Material die Öffnung 214 in der Tankwandung verschließt. Dabei ist es nicht erforderlich, die Menge an plastifiziertem Material genau an das Volumen des Ringraumes 221 anzupassen, da überschüssiges plastifiziertes Material beim Gegeneinanderdrücken der miteinander zu verbindenden Teile aus dem Bereich zwischen dem Fuß 221 und der Oberfläche 264 der Tankwandung 210 nach außen verdrängt werden kann. Auch hier gilt, daß es selbstverständlich möglich ist, unter Anwendung der Anordnung gemäß den Fig. 1 und 2 die Öffnung 214 durch entsprechende Bemessung des Durchmessers derselben und des Außendurchmessers des Teilabschnittes 226 durch letzteren vollständig zu verschließen. Alternativ oder aber auch zusätzlich könnte auch ein Dichtring gemäß der Ausführung der Fig. 3 angeordnet sein, wobei das verdrängte Kunststoffmaterial an der der Mantelfläche des Teilabschnittes 226 des Dichtringes einen Anschlag oder eine Begrenzung für diesen bildet.

Auch bei der Ausführungsform gemäß Fig. 4 ist der Endabschnitt 233 für den Anschluß an einen in der Zeichnung nicht dargestellten Quick-Connector ausgebildet, wobei jedoch hier der Verriegelungsring 280 vom Rohrabschnitt 218 bzw. dessen sich über die Ummantelung 220 hinaus erstreckenden Bereich 233 getragen ist. Auch hier gibt die strichpunktierte Linie 282 den Bereich an, in welchem die Abdichtung gegenüber dem Quick-Connector erfolgt.

## Patentansprüche

1. Kraftfahrzeugtank aus Kunststoff mit wenigstens einer Öffnung (14), an der ein Anschlußstück (16) angebracht ist, welches einen Rohrabschnitt (18) aus einem für Kraftstoff wenig permeablen Kunststoff aufweist, der mit einer Ummantelung (20) aus einem anderen Kunststoffmaterial versehen ist, das mit der Wandung (10) des Tankes verbindbar ist, wobei die Ummantelung (20) an ihrem tankseitigen Ende (23) in einem Abstand vom Rohrabschnitt (18) verläuft und mit der außenseitigen Oberfläche des Tankes verschweißt ist, **dadurch gekennzeichnet**, daß der Rohrabschnitt (18) des Anschlußstückes (16) an seinem tankseitigen Ende einen über die Ummantelung (20) vorstehenden Teilabschnitt (26) aufweist, der sich in die Tanköffnung (14) erstreckt, und der die Öffnung (14) begrenzende Bereich der Tankwandung (10) gegenüber der äußeren Mantelfläche des vorstehenden Teilabschnitt (26) des Rohrabschnittes (18) abgedichtet ist.

2. Kraftfahrzeugtank nach Anspruch 1, **dadurch gekennzeichnet**, daß der Außendurchmesser des über die Ummantelung (20) vorstehenden Teilabschnittes (26) des Rohrabschnittes (18) an den Durchmesser der ihn aufnehmenden Öffnung (14) in der Tankwandung (12) derart angepaßt ist, daß seine äußere Mantelfläche dichtend an dem Wandbereich des Tankes anliegt, welcher die Öffnung (14) begrenzt.

3. Kraftfahrzeugtank nach einem der vorhergehenden Ansprüche, **dadurch gekennzeichnet**, daß in dem Bereich (121) zwischen der Verbindung (130) zwischen Ummantelung (120) und Tankwandung (110) einerseits und dem Rohrabschnitt (118) andererseits eine Dichtung (160) angeordnet ist.

4. Kraftfahrzeugtank nach Anspruch 3, **dadurch gekennzeichnet**, daß ein Teil des bei Herstellung der Schweißverbindung (230) zwischen Ummantelung (220) und Tankwandung (210) plastifizierten Kunststoffmaterials wenigstens einen Teil des Ringraums (221) zwischen Ummantelung (220) und Rohrabschnitt (218) ausfüllt.

5. Kraftfahrzeugtank nach Anspruch 1, **dadurch gekennzeichnet**, daß der vorstehende Teilabschnitt (26) des Rohrabschnittes (18) in das Innere des Tankes (12) hineinragt.

6. Kraftfahrzeugtank nach Anspruch 1, **dadurch gekennzeichnet**, daß das Anschlußstück nahe seinem freien Ende (34) an der Ummantelung (20) mit einer umlaufenden Nut (48) für einen Dichtring (50) versehen ist, der dichtend mit einer am Anschlußstück angebrachten Verbindungsleitung (52) zusammenwirkt.

7. Kraftfahrzeugtank, insbesondere nach Anspruch 1, **dadurch gekennzeichnet**, daß die einander zugekehrten Wandungen von Rohrabschnitt (18) und Ummantelung mit leistenartigen Vorsprüngen (32, 36) und/oder Einziehungen versehen sind, die nach Art einer Labyrinthdichtung ineinandergreifen und zusammenwirken.

8. Kraftfahrzeugtank nach Anspruch 7, **dadurch gekennzeichnet**, daß die leistenartigen Vorsprünge (32, 36) und/oder Einziehungen im wesentlichen quer zur Längsachse (22) des jeweiligen Teiles (24) des Anschlußstückes (16) verlaufen.

9. Kraftfahrzeugtank nach Anspruch 1, **dadurch gekennzeichnet**, daß wenigstens einer der Vorsprünge (38, 42) und/oder wenigstens eine der Einziehungen im wesentlichen parallel zur Längsachse (22, 44) des jeweiligen Teilabschnittes (24, 46) des Anschlußstückes (16) verläuft.

10. Kraftfahrzeugtank nach Anspruch 9, **dadurch gekennzeichnet**, daß wenigstens einer der im wesentlichen parallel zur Längsachse (22) des jeweiligen Teilabschnittes (26) des Anschlußstückes (14) verlaufenden Vorsprünge den Fortsatz eines Vorsprunges (36) bildet, der im wesentlichen quer zur Längsachse (22) des jeweiligen Teils (24) verläuft.

11. Kraftfahrzeugtank nach Anspruch 9, **dadurch gekennzeichnet**, daß diese im wesentlichen parallel zur Längsachse (22, 44) verlaufenden wandteile an oder nahe den Enden der Ummantelung (20) angeordnet sind.

12. Kraftfahrzeugtank nach Anspruch 9, **dadurch gekennzeichnet**, daß der Rohrabschnitt (18) des Anschlußstückes (16) an seinem mit einem Anschlußmittel (52) zu verbindenden Ende mit einem Absatz (35) versehen ist, in dem eine Ausnehmung (42) angebracht ist, die das Ende der Ummantelung (20) aufnimmt.

13. Kraftfahrzeugtank nach einem der vorhergehenden Ansprüche, **dadurch gekennzeichnet**, daß der Rohrabschnitt (18) des Anschlußstückes (16) an seinem mit einem Anschlußmittel (52) zu versehenden Endabschnitt (33) außerhalb der Ummantelung (20) außenseitig mit wenigstens einem sägezahnförmigen Dicht- und/oder Haltering versehen ist und dieser Endabschnitt (33) unmittelbar mit dem Anschlußmittel (52) zusammenwirkt.

14. Kraftfahrzeug nach einem der vorhergehenden Ansprüche, **dadurch gekennzeichnet**, daß das Anschlußstück (16) an seinem mit einem Anschlußmittel zu verbindenden Endabschnitt (133, 233) außenseitig mit einem umlaufenden Verriegelungsring (180, 280) zwecks Verbindung mit einem Quick-Connector versehen ist.
